(19) Europäisches Patentamt
European Patent Office
Office européen des brevets

(11) **EP 1 198 385 B1**

(12) **EUROPÄISCHE PATENTSCHRIFT**

(45) Veröffentlichungstag und Bekanntmachung des Hinweises auf die Patenterteilung:
**22.11.2006 Patentblatt 2006/47**

(51) Int Cl.:
**B64C 25/56** (2006.01)

(21) Anmeldenummer: **00940107.6**

(22) Anmeldetag: **13.07.2000**

(86) Internationale Anmeldenummer:
**PCT/CH2000/000383**

(87) Internationale Veröffentlichungsnummer:
**WO 2001/036268 (25.05.2001 Gazette 2001/21)**

(54) **PNEUMATISCHER SCHWIMMER FÜR LEICHT- UND ULTRALEICHTFLUGZEUGE**

PNEUMATIC FLOAT FOR LIGHT AND ULTRALIGHT AIRCRAFT

FLOTTEUR PNEUMATIQUE DESTINE A DES AVIONS LEGERS ET ULTRALEGERS

(84) Benannte Vertragsstaaten:
**AT BE CH CY DE DK ES FI FR GB GR IE IT LI LU MC NL PT SE**

(30) Priorität: **10.05.2000 CH 911002000**

(43) Veröffentlichungstag der Anmeldung:
**24.04.2002 Patentblatt 2002/17**

(73) Patentinhaber: **Prospective Concepts AG**
**8152 Glattbrugg (CH)**

(72) Erfinder:
• **TO, Frederick, E.**
**CH-4955 Gondiswil (CH)**

• **KAMMER, Res**
**CH-3113 Rubigen (CH)**

(74) Vertreter: **Salgo, Reinhold Caspar**
**Rütistrasse 103**
**8636 Wald (CH)**

(56) Entgegenhaltungen:
**WO-A-98/03398      US-A- 3 154 270**
**US-A- 4 233 102      US-A- 4 697 762**
**US-A- 5 732 650**

**Beschreibung**

Die vorliegende Erfindung betrifft einer pneumatischen Schwimmer für Leicht- und Ultraleichtflugzeuge nach dem Oberbegriff des Patentanspruches 1.

Solche pneumatischen, also druckluftbeaufschlagte, Schwimmer sind mehrere bekannt. Die der vorliegenden Erfindung am nächsten liegenden, also den Stand der Technik darstellenden, sind beispielsweise offenbart in US 4,697,762 (D1), US 2,391,326 (D2), US 2,522,340 (D3) und US 2,345,143 (D4). Während in D2, D3 und D4 der allgemeine Stand der Technik abgegrenzt ist, liegt D1 der vorliegenden Erfindung am nächsten.

In D1 ist ein Schwimmer offenbart, der aus einer flexiblen, aus robustem Gewebe gefertigten äusseren Hülle besteht, die aus Oberseite, Unterseite und Seitenwänden aufgebaut ist. Ober- und Unterseite sind durch eine Anzahl im Wesentlichen vertikal und längs zur Hauptrichtung der Schwimmer eingebaute und ebenfalls textile Stege verbunden. An einer etwas hinter der Mitte liegenden Stelle weist der Schwimmer eine Stufe auf, wie sie bereits 1933 in DE 600 321 offenbart und seither eingesetzt und weiterentwickelt wurde.

Im Querschnitt durch den Schwimmer von D1 an der Stelle dieser genannten Stufe, ist ebenfalls ein im Wesentlichen vertikaler, jedoch senkrecht zur Hauptrichtung des Schwimmers verlaufender textiler Steg eingebaut. In den Kammern, die zwischen den Stegen und zwischen Stegen und Seitenwänden gebildet werden, sind luftdichte Blasen eingelegt, die mit Druckluft beaufschlagt werden und dem Schwimmer einerseits den erforderlichen Auftrieb, anderseits eine gewisse Stabilität verleihen.

Zur Erhöhung von Stabilität und Steifigkeit werden im vorderen, also vor der genannten Kante liegenden Teil Versteifungselemente eingebaut, die teilweise aus Hartschaum, teilweise aus Sperrholz vorgesehen sind. Aussen auf dem aus Gewebe bestehenden Schwimmer ist ein Schuh befestigt, der die Unterseite des vorderen Teiles zusätzlich versteift und den Schwimmer vor Verletzungen schützen soll. Dieser genannte Schuh ist beispielsweise aus Kunststoff gefertigt.

Die Krafteinleitung vom Fahrgestell des Flugzeuges auf die zwei wie beschrieben aufgebauten Schwimmer geschieht 'über zwei längs über die ganze Länge jedes Schwimmers verlaufende Stäbe. Diese liegen seitlich oben an den Schwimmern an und sind an diesen durch lange Laschen geschoben und befestigt.

Die insgesamt vier Stäbe sind durch zwei Querholme verbunden, auf welche sich das Flugzeug abstützt, wobei der hintere Querholm etwa an der Stelle liegt, wo die Unterseite der Schwimmer die erwähnte Stufe aufweist.

Zieht man den vorgesehenen Einsatzbereich der Schwimmer nach D1 in Betracht, so liegt der beanspruchte Hauptvorteil in der Gewichtsersparnis. Da die gewählte Bauart des rein pneumatischen Teils des Schwimmers jedoch ungenügende Steifigkeit aufweist, müssen allerhand Massnahmen zu deren Erhöhung vorgesehen werden, die nicht pneumatisch, daher schwerer, teils sogar wesentlich schwerer als Luft, bzw. als rein pneumatische Bauteile sind. Ferner werden durch den in der Höhe der Stufe quer verlaufenden Steg die Längsstege unterbrochen. Durch die Krafteinleitung des auch etwa an dieser Stelle liegenden hinteren Querholms ergibt sich in dieser Region eine gelenkartige Schwächung des Schwimmers der in einer in D1 beanspruchten Ausführung sogar mit einem den Schwimmer vertikal durchsetzenden Federbein und zwei Drahtseilen verstärkt und verspannt werden muss.

Aus D1 ist zudem nicht ersichtlich, wie andere Querschnittsformen - beispielsweise solche mit V-förmigem Bodenteil - erfindungsgemäss ausgeführt werden können. Aus dem gewählten Aufbau lässt sich zudem mindestens erahnen, dass Schwimmer nach D1 neben den erwähnten Nachteilen auch kaum wirtschaftlich erzeugt werden können.

Die Aufgabe der vorliegenden Erfindung ist es daher, pneumatische Schwimmer für Leicht- und vorzugsweise Ultraleichtflugzeuge zu schaffen, die die genannten Nachteile überwinden, die also leicht und steif sind und zudem kostengünstig herzustellen sind.

Die Lösung der gestellten Aufgabe ist wiedergegeben im Anspruch 1 hinsichtlich ihrer wesentlichen Merkmale, in den folgenden Ansprüchen hinsichtlich weiterer vorteilhafter Ausbildungen. Anhand der beigefügten Zeichnung ist die Erfindung näher erläutert.

Es zeigen

Fig. 1      eine perspektivische Ansicht eines ersten Ausführungsbeispieles,

Fig. 2      einen Querschnitt durch das erste Ausführungsbeispiel,

Fig. 3      ein konstruktives Detail zu Fig. 2,

Fig. 4      eine erfindungsgemässe Ergänzung zu Fig. 2,

Fig. 5      einen Querschnitt durch ein zweites Ausführungsbeispiel,

Fig. 6a      eine Seitenansicht des ersten Ausführungsbeispiels

Fig. 6b      einen Längsschnitt durch ein Detail von Fig. 6a,

Fig. 7      eine perspektivische Durchsicht durch das erste Ausführungsbeispiel.

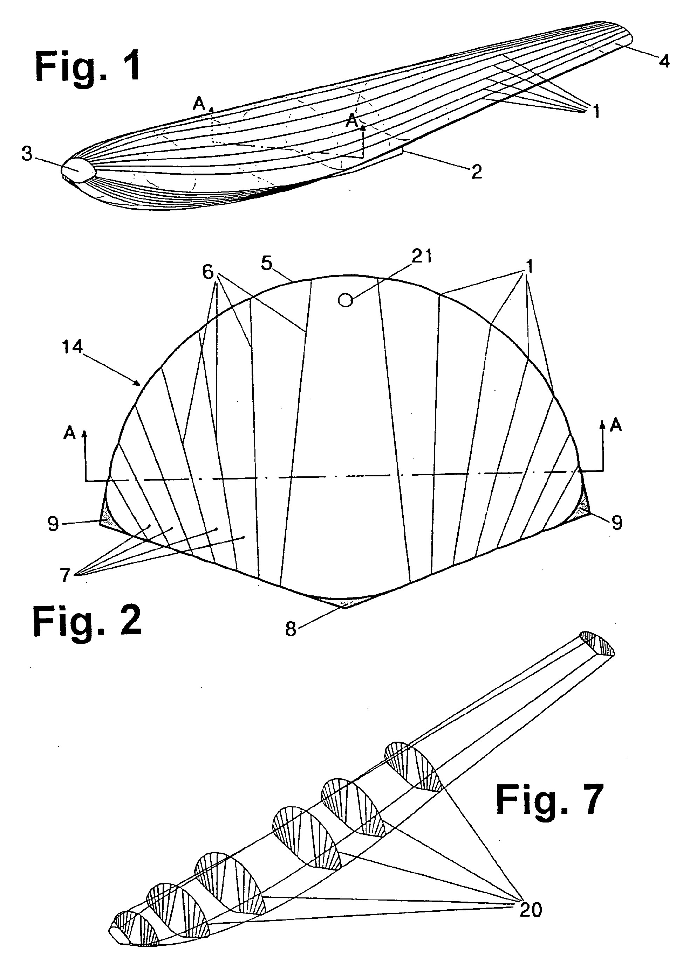

Fig. 1 ist eine Ansicht eines ersten Ausführungsbeispieles eines erfindungsgemässen Schwimmers von schräg vorne unten. Dargestellt ist hier nur die reine pneumatische Struktur, noch ohne alle Befestigungs- und Verbindungsteile. In der Darstellung von Fig.

1 erscheinen längs des Schwingers verlaufende Linien 1, die anhand von Fig. 2 näher erläutert sind. Etwa in der halben Länge des Schwimmers ist eine Stufe 2 sichtbar, die - wie bekannt - zum Abreissen der Wasserströmung vorgesehen ist. Der in Fig. 1 links dargestellte Bug des Schwimmers weist eine Stirnfläche 3 auf, das rechts liegende Heck eine analoge Endfläche 4.

Fig. 2 ist ein typischer Querschnitt durch den Schwimmer von Fig. 1, eingelegt etwa an der mit AA bezeichneten Stelle. Eine Aussenhaut 5, bestehend aus einem luftdicht beschichteten und wenig dehnbaren Gewebe ist über ein Ventil 21 mit Druckluft beaufschlagt und wird in der vorgesehenen Form gehalten durch eine Vielzahl von Stegen 6, die mit der Aussenhaut 5 im Wesentlichen über ihre ganze Länge verbunden sind. Diese Verbindungen können durch Nähen, Kleben oder Schweissen erzeugt werden. Dort, wo die Stege 6 mit der Aussenhaut 5 in genannter Weise verbunden sind, entstehen in dieser die bereits zu Fig. 1 erwähnten Linien 1, die sich im Wesentlichen über die ganze Länge des Schwimmers erstrecken. Die Stege 6 können aus textilem Gewebe oder auch aus Folien bestehen; sie unterteilen den Innenraum des Schwimmers in Kammern 7, die untereinander kommunizieren. Zu diesem Zwecke sind die Stege 6 nicht gänzlich bis zu Stirn- und Endfläche 3, 4 geführt, so dass mindestens an den beiden Enden des Schwimmers Ueberström-Luken (nicht dargestellt) vorhanden sind. Dies ist vor allem bei der Verwendung von an sich luftdichten Folien für die Stege 6 wichtig.

Bei der Verwendung von textilen Geweben für die Stege 6 ist der Luftaustausch zwischen den Kammern 7 schon durch das Material gegeben. Wird eine textile Lage eingesetzt, so ist der Fadenverlauf des Gewebes parallel und senkrecht zur Längsachse des Schwimmers angeordnet. Es hat sich auch als vorteilhaft erwiesen, das textile Gewebe doppellagig einzusetzen, wobei die eine Lage gegenüber der anderen um etwa 45° gedreht ist. Dadurch sind die Stege 6 auch beim Einsatz von textilem Gewebe in der Lage, Scherkräfte aufzunehmen, was die Biegesteifigkeit und die Formstabilität des Schwimmers stark erhöht.

Im Kielbereich ist bei diesem ersten Ausführungsbeispiel eine Kielleiste 8 vorzugsweise durch Kleben oder Schweissen aufgebracht, die einerseits die Richtungsstabilität des Schwimmers verbessert, anderseits dessen Bodenfläche vor Verletzungen schützt. In gleicher Weise sind beim Uebergang von der Bodenfläche zu den Seitenwänden des Schwimmers Seitenleisten 9 angebracht. Deren Aufgabe besteht neben dem Schutz der Aussenhaut 5 im Verhindern des sog. Coanda-Effektes im Wasser, sorgen also für seitlichen Strömungsabriss. Kielleiste 8 und

Seitenleisten 9 sind vorzugsweise aus Kunststoff gefertigt.

Die Seitenleisten 9 erstrecken sich beispielsweise nur über den Vorderteil des Schwimmers, also vom Bug bis zur Stufe 2; die Kielleiste 8 erstreckt sich ebenfalls über den Vorderteil des Schwimmers, kann jedoch auch hinter der Stufe 2 angebracht sein.

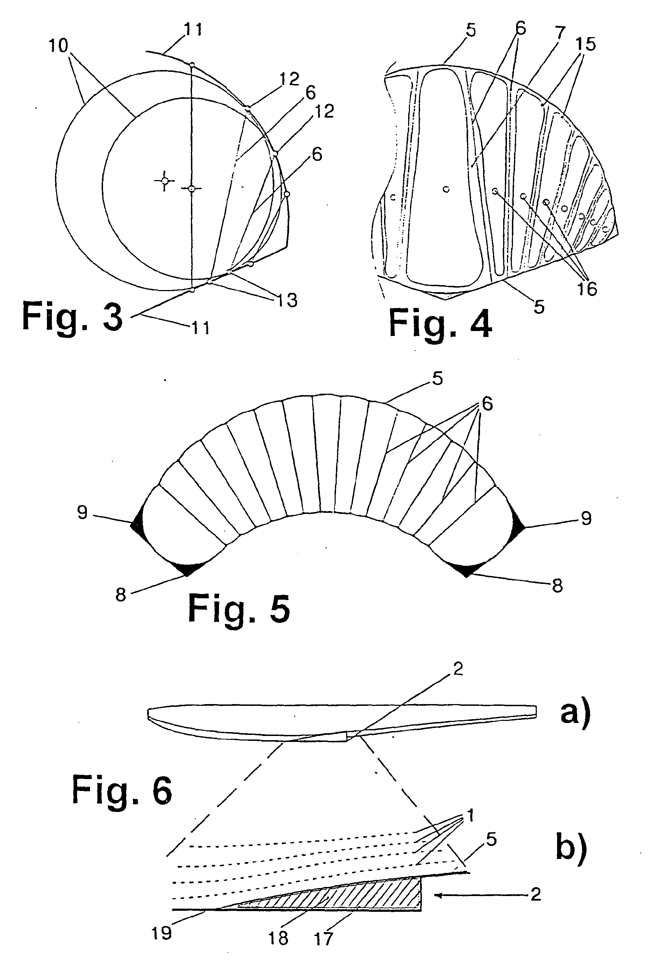

Bei der durch den Entwurf vorgegebenen Anzahl bzw. Dichte der Stege 6 wird deren Richtung ermittelt durch das Einlegen von Schmiegekreisen 10, wie in Fig. 2 gezeigt. Fig. 3 ist ein Ausschnitt aus Fig. 2.

In eine vorgesehene Gesamtkontur 11 des Querschnittes werden die Schmiegekreise 10 so eingelegt, dass sie die Gesamtkontur an vorgegebenen ersten Punkten 12 berühren. Die jeweils zweiten Berührungspunkte 13 mit der Gesamtkontur 11 ergeben sich dann aus elementaren geometrischen Ueberlegungen. Die Berührungspunkte 12, 13 eines jeden Schmiegekreises 10 werden miteinander verbunden und geben die Richtung des hier einzulegenden Steges 6 an.

Die tatsächliche Kontur des Querschnittes im druckluftbeaufschlagten Zustande des Schwimmers ergibt sich aus dem Kräftegleichgewicht, das sich in jedem der Berührungspunkte 12, 13 einstellt. Diese tatsächliche Kontur der Aussenhaut 5, wie sie in Fig. 2 dargestellt und mit dem Bezugszeichen 14 versehen ist, besteht dann aus in den Berührungspunkten 12, bzw. 13 zusammenlaufenden Kreissegmenten, deren Radien bestimmt sind durch die bekannte Beziehung

$$R = \frac{\sigma}{\Delta \rho},$$

wo

R = Krümmungsradius [m]
σ = Umlaufspannung in der Aussenhaut 5 [N/m]
Δp = Druckdifferenz innen-aussen [N/m$^2$]

Da jedoch σ proportional zu Δp ist, ergibt sich für R aus elementarer physikalischer Herleitung eine Grösse, die nur noch von der Geometrie der einzelnen Kammern 7 abhängt und von der Grössenordnung ihrer halben Diagonale ist.

Fig. 4 zeigt ein weiteres erfindungsgemässes Merkmal, wiederum am ersten Ausführungsbeispiel. Die Aussenhaut 5 ist, wie bereits erwähnt, luftdicht ausgeführt, und kann über Ventile beispielsweise in der Endfläche 4 mit Druckluft beaufschlagt werden. Damit steht der ganze Schwimmer unter Druck, die Stege 6 sind gespannt und übernehmen die Aufgabe, den Schwimmer längs zu versteifen, womit keine zusätzlichen Versteifungsmittel notwendig sind. Lediglich für den Fall eines Druckverlustes durch örtliche Verletzung der Aussenhaut 5 sind in die Kammern 7 zwischen Aussenhaut 5 und Stegen 6 luftdichte und flexible, allenfalls elastische Blasen 15 eingelegt, die im Normalbetrieb des Schwimmers auf etwa 80-90% des innerhalb der luftdichten Aussenhaut 5 herrschenden Luftdruckes aufgepumpt sind. Damit übernehmen diese Blasen im genannten Normalbetrieb keine Funktion.

Tritt jedoch innerhalb der Aussenhaut 5, jedoch ausserhalb der Blasen 15 ein Druckverlust auf, so legen sich die Blasen 15 an die Wände der Kammern 7 und sorgen dafür, dass die Statik des Schwimmers im Wesentlichen erhalten bleibt.

Jede Blase 15 verfügt über ein eigenes Ventil 16; diese sind vorzugsweise ebenfalls in der Endfläche 4 angeordnet und vorzugsweise als Rückschlagventile ausgebildet. Schlägt eine dieser Blasen leck oder erleidet sonst einen Druckverlust, so sind die übrigen Blasen 15 davon nicht betroffen. Diese Ventile 16 sind vorzugsweise auf ein nicht dargestelltes Sammelrohr geführt zur gleichmässigen Einstellung des in den Blasen 15 herrschenden Druckes.

Dass die Form des Querschnittes nicht auf die in Fig. 2, 3 und 4 gezeigte beschränkt ist, wird in Fig. 5 gezeigt. Hier ist ein zweikieliger Schwimmer im Sinne der Erfindung, als zweites Ausführungsbeispiel dargestellt. Die Gesamtkontur 11 kann vorgegeben werden und wird durch das erfindungsgemässe Einlegen der Stege 6 modifiziert. Eine Form-Optimierung ist in mehreren solchen iterativ erfolgenden Schritten möglich.

Eine Form, wie die in Fig. 5 dargestellte ist einer gemäss Fig. 1 bis 3 hinsichtlich Sprühverhalten überlegen. Durch die verhältnismässig grosse Neigung der äusseren Stege 6 wird die Stabilität um die horizontale Querachse etwas beeinträchtigt, dafür jene um die vertikale Querachse erhöht.

Zur Richtungsstabilisierung im Fahrbetrieb und zum Schutz vor Verletzungen der Unterseite des Schwimmers sind hier seiner Form entsprechend zwei Kielleisten 8 vorgesehen. Die ebenfalls vorhandenen Seitenleisten 9 dienen zur Unterdrückung des bei dieser Bauform verstärkt auftretenden Coanda-Effektes. Ferner übernehmen sie, wie bereits früher dargelegt, ebenfalls Schutzfunktion vor seitlichen Verletzungen der Aussenhaut 5.

Fig. 6a ist eine Seitenansicht des ersten Ausführungsbeispiels eines erfindungsgemässen Schwimmers, Fig. 6b ein Längsschnitt durch die Stufe 2, wie angedeutet. Der Längsschnitt durch den Schwimmer zeigt hier einen kontinuierlichen Uebergang über die Querschnittsverjüngung der Stufe, wie durch die glatt verlaufenden, gestrichelt dargestellten Linien 1 sichtbar gemacht ist. Auf diese Weise werden Spannüngsspitzen durch die Biegebeanspruchung des Schwimmers in der Aussenhaut 5 und in den Stegen 6 vermieden, wie sie sonst bei einer Diskontinuität unvermeidlich sind. Die eigentliche Stufe 2 besteht beispielsweise aus einer Kunststoffschale 17, die mit einem Hartschaum 18 gefüllt ist und an der Aussenhaut 5 formschlüssig angeklebt ist. Die Kunststoffschale 17 ist ferner mit einer Schutzschicht 19 überzogen, die vorteilhafterweise die ganze Unterseite des Schwimmers bedeckt. Damit ist auch ein glatter Uebergang vom Vorderteil des Schwimmers auf die Kunststoffschale 17 gewährleistet.

Fig. 7 zeigt den erfindungsgemässen Verlauf der Stege 6 über die ganze Länge eines Schwimmers nach dem ersten Ausführungsbeispiel. Eingezeichnet sind acht Querschnittsflächen 20, die jedoch immaterieller Natur sind und keineswegs etwa Stege oder sonstwie geartete Querschotte darstellen. Es ist' aus Fig. 7 ersichtlich, dass die Form der Querschnittsflächen 20 im Wesentlichen überall die gleiche ist, unterschiedlich sind nur deren Grössen.

Abweichend von Fig. 7 kann der hinter der Stufe 2 liegende Teil des Schwimmers selbstverständlich auch eine andere Form des Bodens- und damit der Querschnittsflächen 20 - aufweisen, sofern die Formübergänge unter Berücksichtigung der in Fig. 6a, b dargestellten Ausführungen der Stufe 2, glatt sind.

Dies ist beispielsweise beim zweiten Ausführungsbeispiel des erfindungsgemässen Schwimmers der Fall, wo der hinter der Stufe liegende Teil auch einkielig ausgeführt sein kann. Dies besonders unter Berücksichtigung der Tatsache, dass die zweikielige Ausführung nur im vorderen Teil ihre Wirksamkeit entfaltet.

Für die Einleitung der statischen und dynamischen Lasten vom Flugzeug auf die Schwimmer und zwischen den Schwimmern sind Lösungen bekannt. Es sind flächige oder stabförmige Strukturen, die sich über einen grossen Teil der Schwimmerlänge erstrecken und die beiden Schwimmer verbinden. Solche Lösungen sind, wie erwähnt, bekannt oder ergeben sich in naheliegender Weise aus der Lösung der Aufgabe Lasten auf möglichst grosse Flächen zu verteilen. Solche Aufgaben stellen sich überall dort, wo Lasten in textile und/oder pneumatische Bauteile einzuleiten sind.

**Patentansprüche**

1. Pneumatischer Schwimmer für Leicht- und Ultraleichtflugzeuge, aus textilem Material, mit einer geschlossenen Aussenhaut (5) und mit im Inneren des Schwimmers angeordneten und sich im Wesentlichen über die ganze Länge des Schwimmers erstreckenden flexiblen Stegen (6), welche an der Aussenhaut (5) über ihre ganze Länge befestigt sind, wodurch im Inneren des Schwimmers Kammern (7) zwischen den Stegen (6) und der Aussenhaut (5) abgeteilt werden, in welche luftdichte und flexible, mit Druckluft beaufschlagbare Blasen (15) eingelegt sind, **dadurch gekennzeichnet, dass**

   - die Aussenhaut (5) luftdicht ist,
   - die Lage und Stellung der Stege (6) so festgelegt werden, dass in einer vorgesehenen Gesamtkontur (11) einer Querschnittsfläche durch den Schwimmer Schmiegekreise eingelegt werden, und die zwei Berührungspunkte (12, 13) jedes Schmiegekreises an diese Gesamtkontur (11) die Befestigungspunkte jedes Steges (6) an der Aussenhaut (5) definieren, untereinander kommunizieren die Kammern (7),
   - die luftdichte Aussenhaut mindestens ein Ventil (21) aufweist, über welches sie mit Luftdruck beaufschlagt werden kann.

**2.** Pneumatischer Schwimmer nach Patentanspruch 1, **dadurch gekennzeichnet, dass** die Stege (6) aus textilem, wenig dehnbaren Material gefertigt sind, dessen Fadenverlauf im Wesentlichen parallel und senkrecht zur Längsachse des Schwimmers angeordnet ist.

**3.** Pneumatischer Schwimmer nach Patentanspruch 2, **dadurch gekennzeichnet, dass** Stege (6) vorhanden sind, die doppellagig ausgeführt sind, wobei der Fadenverlauf der zweiten Lage des textilen Materials gegenüber der ersten um etwa 45° gedreht ist.

**4.** Pneumatischer Schwimmer nach Patentanspruch 1, **dadurch gekennzeichnet, dass** die Stege (6) aus wenig dehnbaren Kunststoff-Folien gefertigt sind.

**5.** Pneumatischer Schwimmer nach Patentanspruch 2, 3 oder 4, **dadurch gekennzeichnet, dass** die Stege (6) an der Aussenhaut (5) durch Nähen befestigt sind.

**6.** Pneumatischer Schwimmer nach Patentanspruch 2, 3 oder 4, **dadurch gekennzeichnet, dass** die Stege (6) an der Aussenhaut (5) durch Kleben befestigt sind.

**7.** Pneumatischer Schwimmer nach Patentanspruch 2, 3 oder 4, **dadurch gekennzeichnet, dass** die Stege (6) an der Aussenhaut (5) durch Schweissen befestigt sind.

**8.** Pneumatischer Schwimmer nach Patentanspruch 1, **dadurch gekennzeichnet, dass** die Blasen (15) aus wenig dehnbarem luftdicht beschichtetem textilen Material bestehen.

**9.** Pneumatischer Schwimmer nach Patentanspruch 1, **dadurch gekennzeichnet, dass** die Blasen (15) aus einem Elastomer bestehen.

**10.** Pneumatischer Schwimmer nach Patentanspruch 8 oder 9, **dadurch gekennzeichnet, dass** jede Blase 15) ein an der Aussenhaut (5) liegendes Ventil (16) aufweist.

**11.** Pneumatischer Schwimmer nach Patentanspruch 10, **dadurch gekennzeichnet, dass** der Arbeitsdruck in den Blasen (15) zwischen 10% und 20% geringer ist als jener in der Aussenhaut (5).

**12.** Pneumatischer Schwimmer nach Patentanspruch 1 bis 11, **dadurch gekennzeichnet, dass** die Aussenhaut (5) mindestens auf dem ins Wasser zu liegenden Teil mit einer Schutzschicht (19) versehen ist.

**13.** Pneumatischer Schwimmer nach Patentanspruch 12, **dadurch gekennzeichnet, dass** der Schwimmer aus einem vorderen und einem hinteren Teil besteht, wobei der Uebergang vom vorderen auf den hinteren Teil aus einer Stufe (2) besteht, bei der

- die Stege (6) im Inneren des Schwimmers so geformt sind, dass die grössere Querschnittsfläche vor der Stufe kontinuierlich auf die kleinere Querschnittsfläche hinter der Stufe übergeführt wird,
- die Aussenhaut (5) eine die eigentliche Stufe bildende Kunststoffschale (17) trägt, welche ausgefüllt ist,
- die Schutzschicht (19) über die Stufe (2) gezogen ist und auch die Kunststoffschale (17) bedeckt.

**14.** Pneumatischer Schwimmer nach Patentanspruch 12, **dadurch gekennzeichnet, dass** der Schwimmer mindestens eine Kielleiste (8) und zwei Seitenleisten (9) trägt zum Schutz des Schwimmers vor Verletzungen.

**15.** Pneumatischer Schwimmer nach Patentanspruch 14, **dadurch gekennzeichnet, dass** Kielleisten (8) und Seitenleisten (9) aus Kunststoff bestehen und auf den Schwimmer aufgeklebt sind.

**Claims**

**1.** A pneumatic float for light and ultralight aircraft of textile material, with a closed outer skin (5) and with flexible webs (6) arranged in the interior of the float, wherein the flexible webs essentially extend over the entire length of the float and are fixed to the outer skin (5) over their entire length such that the interior of the float is divided into chambers (7) between the webs (6) and the outer skin (5), and wherein air-tight and flexible bladders (15) that can be acted upon with compressed air are inserted into the aforementioned chambers, **characterized in that**

- the outer skin (5) is air-tight,
- the position and orientation of the webs (6) are defined in such a way that osculating circles are drawn in a designated overall contour (11) of a cross-sectional surface through the float and the two contact points (12, 13) of each osculating circle with this overall contour (11) define the points at which each web (6) is fixed to the outer skin (5),
- the chambers (7) intercommunicate,
- the air-tight outer skin features at least one valve (21) for being acted upon with compressed air.

**2.** A pneumatic float according to Claim 1, **character-**

**ised in that** the webs (6) are manufactured from low-stretch textile material whose run of fibres is arranged essentially parallel to and perpendicular to the longitudinal axis of the float.

3. A pneumatic float according to Claim 2, **characterised in that** webs (6) are present which are double walled constructed, whereby the run of the fibres of the second layer of the textile material is turned by some 45° from the first.

4. A pneumatic float according to Claim 1, **characterised in that** the webs (6) are manufactured from low-stretch plastics foils.

5. A pneumatic float according to Claim 2, 3 or 4, **characterised in that** the webs (6) are fastened to the outer skin (5) by sewing.

6. A pneumatic float according to Claim 2, 3 or 4, **characterised in that** the webs (6) are fastened to the outer skin (5) by gluing.

7. A pneumatic float according to Claim 2, 3 or 4, **characterised in that** the webs (6) are fastened to the outer skin (5) by welding.

8. A pneumatic float according to Claim 1, **characterised in that** the bladders (15) comprise low-stretch airtight laminated textile material.

9. A pneumatic float according to Claim 1, **characterised in that** the bladders (15) comprise an elastomer.

10. A pneumatic float according to Claim 8 or Claim 9, **characterised in that** each bladder (15) has a valve (16) lying on the outer skin (5).

11. A pneumatic float according to Claim 10, **characterised in that** the working pressure in the bladders (15) is between 10% and 20% less than that in the outer skin (5).

12. A pneumatic float according to Claim 1 to 11, **characterised in that** the outer skin (5) is provided with a protective layer (19) at least on the part which enters the water.

13. A pneumatic float according to Claim 12, **characterised in that** the float comprises a forward and a rear part, whereby the transition from the forward to the rear part includes a step (2), in which
the webs (6) within the float are shaped such that the greater cross sectional surface forward of the step (2) is translated continuously into the smaller cross section behind the step (2),
the outer skin (5) carries a plastics material shell (17) forming the actual step (2), which is filled,
the protective layer (19) is taken over the step (2) and also covers the plastics material shell.

14. A pneumatic float according to Claim 12, **characterised in that** the float carries at least one keel rail (8) and two side rails (9) for the protection of the float against damage.

15. A pneumatic float according to Claim 14, **characterised in that** the keel rails (8) and side rails (9) comprise plastics material and are glued onto the float.

**Revendications**

1. Flotteur pneumatique pour avions légers et ultralégers en matériau textile avec une enveloppe externe (5) fermée et avec, placées à l'intérieur du flotteur, des traverses (6) flexibles s'étendant essentiellement sur toute la longueur du flotteur, lesquelles sont fixées sur toute la longueur de l'enveloppe externe (5), ce par quoi à l'intérieur du flotteur des chambres (7) sont divisées entre les traverses (6) et l'enveloppe externe (5) dans lesquelles des bulles étanches à l'air et flexibles pouvant être alimentées en air comprimé sont placées, **caractérisé en ce que** l'enveloppe externe (5) est étanche à l'air, la situation et la position des traverses (6) sont ainsi définies que dans un contour général (11) prévu d'une surface transversale à travers le flotteur, des cercles souples sont placés et les deux points de contact (12, 13) de chaque cercle souple sur ce contour général (11) définissent les points de fixation de chaque traverse (6), les chambres (7) communiquent entre elles, l'enveloppe externe étanche à l'air présente au moins un clapet (21) par lequel elle peut être alimentée en air comprimé.

2. Flotteur pneumatique selon la revendication 1, **caractérisé en ce que** les traverses (6) sont fabriquées en matériau textile peu extensible, dont les fils sont placés essentiellement parallèlement et verticalement à l'axe longitudinal du flotteur.

3. Flotteur pneumatique selon la revendication 2, **caractérisé en ce que** des traverses (6) sont prévues, qui sont réalisées en double couche, les fils de la deuxième couche du matériau textile étant tournés de 45° par rapport à la première.

4. Flotteur pneumatique selon la revendication 1, **caractérisé en ce que** les traverses (6) sont fabriquées en feuilles de plastique peu extensibles.

5. Flotteur pneumatique selon la revendication 2, 3 ou 4, **caractérisé en ce que** les traverses (6) sont fixées sur l'enveloppe externe (5) par collage.

**6.** Flotteur pneumatique selon la revendication 2, 3 ou 4, **caractérisé en ce que** les traverses (6) sont fixées sur l'enveloppe externe (5) par couture.

**7.** Flotteur pneumatique selon la revendication 2, 3 ou 4, **caractérisé en ce que** les traverses (6) sont fixées sur l'enveloppe externe (5) par soudure.

**8.** Flotteur pneumatique selon la revendication 1, **caractérisé en ce que** les bulles (15) sont en matériau textile revêtu peu extensible et étanche à l'air.

**9.** Flotteur pneumatique selon la revendication 1, **caractérisé en ce que** les bulles (15) sont fabriquées en un élastomère.

**10.** Flotteur pneumatique selon la revendication 8 ou 9, **caractérisé en ce que** chaque bulle (15) présente un clapet (16) reposant sur l'enveloppe externe (5).

**11.** Flotteur pneumatique selon la revendication 10, **caractérisé en ce que** la pression de travail dans les bulles (15) est inférieure de 10% à 20% à celle de l'enveloppe externe (5).

**12.** Flotteur pneumatique selon la revendication 1 à 11, **caractérisé en ce que** l'enveloppe externe (5) est munie au moins d'une couche de protection (19) sur la partie à poser dans l'eau.

**13.** Flotteur pneumatique selon la revendication 12, **caractérisé en ce que** le flotteur se compose d'une partie avant et d'une partie arrière, la transition de la partie avant à la partie arrière consiste en un étage (2) dans lequel les traverses (6) à l'intérieur du flotteur sont formées de manière à ce que la surface transversale plus grande avant l'étage soit amenée en continu sur la surface transversale plus petite derrière l'étage, l'enveloppe externe (5) supporte une coque de plastique (17) formant le propre étage qui est remplie, la couche de protection (19) est tendue sur l'étage (12) et recouvre également la coque de plastique (17).

**14.** Flotteur pneumatique selon la revendication 12, **caractérisé en ce que** le flotteur supporte au moins une baguette de dérive (8) et deux baguettes latérales (9) pour protéger le flotteur des dommages.

**15.** Flotteur pneumatique selon la revendication 14, **caractérisé en ce que** la baguette de dérive (8) et les baguettes latérales (9) sont en plastique et collées sur le flotteur.

# Fig. 1

# Fig. 2

# Fig. 7

Fig. 3

Fig. 4

Fig. 5

Fig. 6

a)

b)